# DEMANDE DE BREVET EUROPEEN

(11) **EP 1 043 907 A1**
(43) Date de publication de la demande: **11.10.2000**
(21) Numéro de dépôt: 00201146.8
(22) Date de dépôt: 30.03.2000
(51) Int. Cl.: H04Q 7/38

(54) **Transmission d'informations de tarif au moment de la connexion**

(30) Priorité: 07.04.1999 FR 9904344
(71) Demandeur: Koninklijke Philips Electronics N.V., 5621 BA Eindhoven (NL)
(72) Inventeur: Antony, Olivier, 75008 Paris (FR)
(74) Mandataire: Chaffraix, Jean

(57) **Abrégé**

L'invention permet de fournir une information de tarif à destination d'un ou plusieurs terminaux ciblés d'un réseau de télécommunications, pour indiquer aux utilisateurs le tarif applicable avant l'établissement de la connexion ou bien pour fournir des éléments de calcul à un terminal doté de moyens de pré-paiement. Pour cela, l'information de tarif est codée à l'intérieur d'un message de contrôle d'appel normalisé émis pour établir la connexion et destiné à être reçu par au moins un terminal avant l'établissement de la connexion.

Application : radiotéléphonie.

## Description

L'invention concerne un système de communication comportant des moyens de connexion pour établir une connexion sur requête d' un terminal appelant vers au moins un terminal appelé, lesdits moyens de connexion comprenant des moyens d'émission pour émettre des messages de contrôle d'appel normalisés à destination du terminal appelant d'une part, pour lui confirmer le traitement de sa requête et pour établir une première connexion, et à destination du terminal appelé d'autre part, pour l'avertir d'un appel entrant et pour établir une deuxième connexion.

Elle concerne également un terminal de communication comportant des moyens de réception pour recevoir des messages de contrôle d'appel normalisés émis par un système de communication en vue d'établir une connexion vers un terminal distant.

Elle concerne enfin un procédé de communication destiné à établir une connexion sur requête d'un terminal appelant vers un terminal appelé, ledit procédé comprenant une étape d'émission de messages de contrôle d'appel normalisés à destination du terminal appelant d'une part, pour lui confirmer le traitement de sa requête et pour établir une première connexion, et à destination du terminal appelé d'autre part, pour l'avertir d'un appel entrant et pour établir une deuxième connexion.

L'invention a de nombreuses applications, notamment dans les systèmes de radiotéléphonie mobile de type GSM fonctionnant avec une carte d'identification d'abonné ou bien avec une carte prépayée, pour fournir des informations de tarif fiables aux utilisateurs ainsi qu'aux terminaux de pré-paiement. En effet, les opérateurs de réseaux offrent en général plusieurs tarifications en fonction de plages horaires déterminées, ces tarifications étant en outre susceptibles de modifications fréquentes, ce qui rend la planification des dépenses assez complexe pour un utilisateur. D'autre part, pour simplifier les opérations de facturation, le calcul du coût des consommations peut être effectué au niveau du terminal grâce à une carte de pré-paiement, en fonction des informations de tarif fournies au terminal par l'opérateur du réseau. Un procédé de mise à jour performant de ces informations est alors nécessaire.

Une méthode connue consiste à implémenter des tables de tarif dans les terminaux **[...]** et à mettre à jour ces tables régulièrement à l'aide de messages courts appelés SMS-CB diffusés par le réseau à tous les utilisateurs du système.

Ce procédé comporte inconvénient majeur de limiter la capacité du réseau car l'émission systématique de messages à destination de tous les utilisateurs du système consomme beaucoup de ressources. Pour remédier à cet inconvénient, l'invention propose une méthode très économique pour fournir une information de tarif immédiatement utilisable par un terminal ciblé, sans pratiquement consommer de ressources supplémentaires dans le réseau. Selon un avantage de l'invention, les informations de tarif applicable peuvent être fournies de façon discrète à un ou plusieurs terminaux ciblés en fonction de critères déterminés.

Pour cela, il est prévu un système, du genre mentionné dans le préambule, remarquable en ce qu'il comprend des moyens de codage pour coder une information de tarif dans au moins l'un desdits messages de contrôle d'appel normalisés à destination d'au moins l'un desdits terminaux. De cette manière, le système évite l'envoi d'un message particulier prévu uniquement pour contenir l'information de tarif. En effet, cette information est codée dans un message normalisé de contrôle d'appel qui est toujours envoyé lors de l'établissement d'une connexion. Ainsi, de façon avantageuse, la transmission de l'information de tarif ne consomme aucune ressource supplémentaire au niveau du réseau et l'utilisateur est informé immédiatement du tarif qui sera effectivement appliqué à la communication. L'information peut être transmise au terminal qui a initié la connexion ou bien à celui qui l'accepte notamment dans le cas, appelé roaming, où la communication est reçue hors de la zone de couverture du réseau d'abonnement principal du terminal appelé, car celui-ci peut se voir facturer une partie de la communication reçue.

Selon un mode de réalisation préférentiel de l'invention, lesdits moyens de codage sont prévus pour coder ladite information de tarif à l'intérieur dudit message normalisé dans un élément de code du type 〈〈 facility information element 〉〉, décrit dans la recommandation GSM 04.80 au chapitre 3.6 et à l'annexe A.

La description suivante, faite en regard des dessins ci-annexés, le tout donné à titre d'exemple non limitatif fera bien comprendre comment l'invention peut être réalisée.
La figure 1 est un schéma montrant un terminal et un système de télécommunications selon l'invention.
La figure 2 est un schéma de principe pour illustrer le fonctionnement d'un terminal téléphonique selon l'invention.
La figure 3 illustre un procédé de connexion selon l'invention.

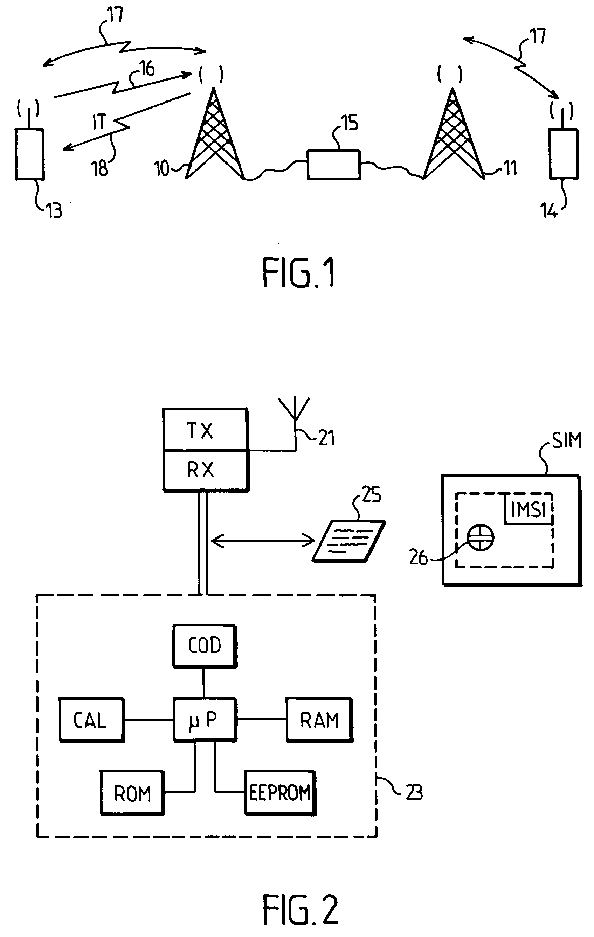

L'exemple de système schématisé à la figure 1 représente un sous-système radio très simplifié de type GSM conforme à une recommandation de type ETS 300 940 de l'ETSI (de l'anglais European Telecommunications Standards Institute). L'invention peut cependant être mise en oeuvre dans d'autres systèmes de télécommunications permettant d'établir des connexions en mode circuit entre au moins une partie appelante et une partie appelée.

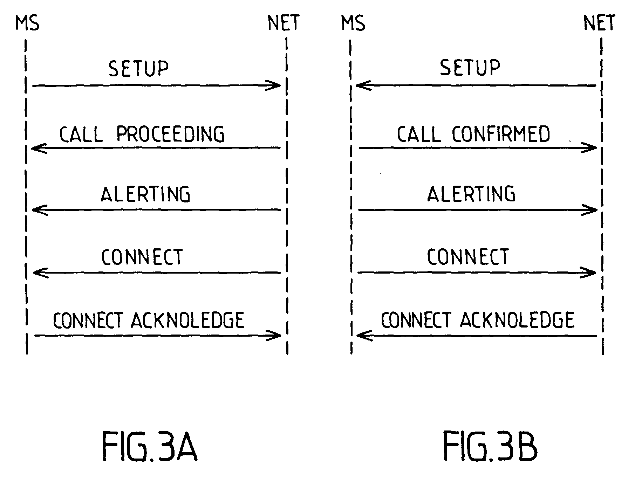

Le système de la figure 1 comprend deux stations radio de base 10 et 11 pour réaliser l'interface radioélectrique entre le réseau radio mobile GSM et des stations mobiles ou terminaux 13 et 14. Un contrôleur 15 pilote les stations de base 10 et 11 et contrôle le sous système radio. Il assure également des fonctions de concentration de trafic permettant de réduire les coûts de transmission du réseau. Dans cet exemple, le terminal 13, dit terminal appelant, souhaite entrer en communication avec le terminal 14, dit terminal appelé. Pour cela, le terminal 13 adresse une requête de connexion 16 au réseau via la station de base 10 la plus proche. La procédure de connexion sur requête selon l'invention sera décrite plus loin en référence à la figure 3. Sous le contrôle du contrôleur 15, les stations de base 10 et 11 vont allouer des ressources radio et établir une connexion 17 entre les terminaux. Une fois le lien radio établi, chaque minute de communication devra être facturée selon un schéma contractuel, prédéfini par les opérateurs des réseaux mis en oeuvre durant la connexion. En général, le coût de la communication est imputé au terminal appelant, mais il peut également être imputé au terminal appelé ou être partagé entre les deux selon une répartition prédéterminée, en fonction du contrat qui les lie les opérateurs entre eux, des différents contrats d'abonnement ou de pré-paiement contractés par les utilisateurs auprès de leur réseau principal, du numéro appelé, etc.

Bien que seul un sous-système radio soit représenté sur la figure 1 pour des raisons de clarté, plusieurs systèmes beaucoup plus complexes et gérés par des opérateurs de réseau différents peuvent être mis en jeu pour établir une communication entre deux terminaux géographiquement distants. Dans le cas particulier où le terminal appelé se trouve, par exemple à l'étranger, dans la zone de couverture d'un autre système que celui auquel il a acheté un service d'abonnement ou de pré-paiement, il se verra en général imputer au moins une partie du coût des appels entrants correspondant à la connexion entre le réseau qui l'héberge et son fournisseur de service habituel ou réseau principal. La figure 1 illustre le cas simple dans lequel les deux terminaux impliqués dans la connexion se trouvent dans une même zone de couverture. L'intégralité du coût de la communication est alors imputable au terminal appelant 13.

L'invention a au moins deux objectifs :
- permettre à un terminal appelant muni d'un circuit de pré-paiement de calculer le coût de la communication de façon fiable et
- permettre à l'utilisateur de connaître à l'avance le tarif applicable à sa communication.

Pour cela, à la réception de la requête de connexion 16 par la station de base 10, le contrôleur 15 déclenche, via les stations de base appropriées, ici la station 10, l'émission d'un message prédéterminé 18 contenant une information de tarif IT à destination du terminal appelant 13 auquel la communication doit être facturée. Selon une variante de réalisation de l'invention mettant en oeuvre des moyens logiciels spécifiques dans le réseau, le message prédéterminé 18 peut être émis à destination de tous les terminaux impliqués dans la connexion ou bien aux seuls terminaux qui doivent être facturés ou encore à tout équipement (serveur) susceptible d'utiliser cette information, notamment pour calculer le coût de la communication. L'émission discrète de l'information de tarif à destination de quelques terminaux ou équipements ciblés apporte l'avantage considérable de ne pas saturer inutilement le réseau, contrairement à la méthode connue qui consiste à diffuser des messages de mise à jour de façon systématique à tous les terminaux du système.

La figure 2 détaille un exemple de structure convenant au terminal radio téléphonique 12 fonctionnant par exemple avec une carte SIM prépayée. Il comprend de façon connue un circuit d'émission / réception noté TX/RX couplé à une antenne 21 pour émettre et recevoir des messages en provenance et à destination du réseau. Les opérations du radiotéléphone sont contrôlées par un organe de contrôle 23 muni d'un microprocesseur µP, d'une mémoire volatile RAM, d'une mémoire programmable EEPROM et d'une mémoire morte ROM. L'organe de contrôle 23 traite les signaux émis et reçus par le circuit d'émission TX/RX et gère l'interface utilisateur constituée entre autres, d'un circuit de connexion 25 pour la carte SIM. Lorsque la carte est insérée dans l'appareil, le circuit de connexion 25 coopère avec un autre circuit imprimé 26 sur la carte, pour permettre au microprocesseur µP d'accéder aux informations contenues dans des fichiers de la carte SIM. En particulier, le processeur µP effectue des opérations de lecture du fichier IMSI (de l'anglais International Mobile Subscriber Identity) indiquant le numéro d'identité de l'utilisateur et des opérations d'écriture dans les mémoires EEPROM et RAM. Si le processeur reconnaît le numéro IMSI comme étant un numéro associé à une carte de pré-paiement, il active les opérations prévues au mode prépayé. Sinon, il active les fonctions standards convenant à une carte d'abonnement classique.

Selon le mode de réalisation préférentiel décrit plus en détails à la figure 3, il est prévu que le message prédéterminé contenant l'information de tarif soit un message normalisé généré automatiquement pendant la phase normale d'établissement de la connexion. Selon ce mode de réalisation, l'information de tarif est codée à l'intérieur du message normalisé selon un mode de codage particulier permettant notamment aux terminaux qui ne sont pas munis de l'invention, d'ignorer le message ou l'information qu'il contient sans préjudice et de façon transparente pour l'utilisateur. Pour retrouver cette information, l'organe de contrôle 23 comprend des moyens de décodage COD, recevant le message par l'intermédiaire des connecteurs 25 et 26 pour le décoder et transmettre l'information utile à un organe de calculs CAL via le microprocesseur pour calculer le coût de la communication.

Les figures 3A et 3B décrivent la procédure de contrôle d'appel en émission (figure 3A) et en réception (figure 3B) pour illustrer un procédé de connexion selon le mode de réalisation préférentiel de l'invention. Il est particulièrement adapté à un système radio mobile conforme à une recommandation du type GSM 04.80. L'intérêt de ce mode de réalisation est double. Il n'utilise, pour transmettre l'information de tarif, aucune ressource autre que celles déjà utilisées pour l'établissement de la connexion. De plus, il synchronise automatiquement la réception de l'information utile à celle d'un message transmis pendant la phase normale de connexion, ce qui apporte l'avantage supplémentaire de permettre à l'utilisateur de choisir éventuellement à ce stade, c'est-à-dire juste avant l'établissement de la connexion, de différer finalement son appel à une plage horaire plus économique. Selon l'art antérieur cité dans l'introduction, il n'était effectivement pas prévu de synchroniser la réception des messages courts de type SMS-CB avec une requête de connexion, de sorte que les utilisateurs ne pouvaient être informés en temps utile et de façon suffisamment fiable, du tarif effectivement appliqué à leur communication.

Sur les figures 3A et 3B, les flèches horizontales symbolisent les échanges de messages entre le terminal mobile MS et le réseau NET dans le cas d'un appel sortant (figure 3A) et d'un appel entrant (figure 3B). En émission, la procédure de contrôle d'appel selon la recommandation citée comprend la transmission des messages suivants :
- SETUP pour déclencher la connexion de l'appel,
- CALL PROCEEDING pour répondre à un appel sortant,
- ALERTING pour avertir le mobile appelant et générer une sonnerie de signalisation,
- CONNECT pour connecter l'appel,
- CONNECT ACKNOLEDGE pour acquitter la connexion. En réception :
- SETUP pour déclencher la connexion de l'appel,
- CALL CONFIRMED pour confirmer un appel entrant,
- ALERTING pour avertir le mobile appelant et générer une sonnerie de signalisation,
- CONNECT pour connecter l'appel,
- CONNECT ACKNOLEDGE pour acquitter la connexion.

L'invention prévoit de transmettre l'information de tarif dans l'un ou plusieurs de ces messages de contrôle d'appel, la redondance permettant d'accroître la fiabilité du procédé. Le mode de réalisation préféré préconise d'insérer l'information de tarif, par exemple, dans le message ALERTING pour un appel sortant et dans le message SETUP pour un appel entrant. Selon une variante de réalisation, l'information peut être transmise dans un message de type FACILITY décrit dans la recommandation GSM 04.80 au chapitre 2.3. L'inconvénient de ce mode par rapport au mode préféré est qu'il nécessite l'émission d'un message spécial de type FACILITY pendant la phase de connexion en plus des messages normaux de contrôle d'appel.

Quel que soit le message choisi pour véhiculer l'information de tarif jusqu'à ses destinataires sélectionnés, l'information doit être implémentée dans le message selon un code approprié susceptible d'être décodé par les terminaux destinataires dotés de la fonctionnalité prévue par l'invention. L'invention prévoit de coder l'information de tarif à l'intérieur du message dans un élément de code du type 〈〈 facility information element 〉〉, décrit dans la recommandation GSM 04.80 au chapitre 3.6 et à l'annexe A. L'utilisation de l'élément 〈〈 facility 〉〉 a l'avantage de permettre aux autres terminaux non munis de la fonctionnalité d'ignorer l'information. La norme citée prévoit en effet que le contenu de l'élément de code 〈〈 facility 〉〉 est ignoré par le récepteur s'il n'est pas reconnu.

On a ainsi décrit et illustré à l'aide d'exemples une méthode et des équipements de télécommunications permettant d'aider les utilisateurs d'une part, dans la gestion de leur budget de dépenses téléphoniques et les opérateurs de réseaux d'autre part, en optimisant les ressources nécessaires aux opérations de facturation. L'invention apporte notamment les avantages suivants :
- permettre de cibler les terminaux destinataires de l'information de tarif
- optimiser les ressources du réseau,
- délivrer une information fiable aux terminaux quand ils en ont besoin,
- de plus, elle est parfaitement transparente pour les autres terminaux.

Bien entendu, des variantes de réalisation pourront être apportées sans sortir du cadre de l'invention, notamment en ce qui concerne l'implémentation et le contenu de l'information de tarif à l'intérieur d'un message normalisé. En particulier, l'information de tarif peut consister en une indication de tarif applicable du type 〈〈 plein tarif 〉〉, 〈〈 tarif réduit 〉〉 ou bien une indication de la plage horaire courante du type 〈〈 plage i 〉〉, 〈〈 plage 2 〉〉, etc.

## Revendications

1. Système de communication comportant des moyens de connexion pour établir une connexion sur requête d' un terminal appelant vers au moins un terminal appelé, lesdits moyens de connexion comprenant des moyens d'émission pour émettre des messages de contrôle d'appel normalisés à destination du terminal appelant d'une part, pour lui confirmer le traitement de sa requête et pour établir une première connexion, et à destination du terminal appelé d'autre part, pour l'avertir d'un appel entrant et pour établir une deuxième connexion,
caractérisé en ce que le système comprend des moyens de codage pour coder une information de tarif dans au moins l'un desdits messages de contrôle d'appel normalisés à destination d'au moins l'un desdits terminaux.

2. Système selon la revendication 1, caractérisé en ce que lesdits moyens de codage sont prévus pour coder ladite information de tarif dans un message de type 〈〈 ALERTING 〉〉 et / ou dans un message de type 〈〈 SETUP 〉〉 décrits dans la recommandation GSM 04.80, à destination du terminal appelant et / ou à destination du terminal appelé, respectivement.

3. Système selon la revendication 1, caractérisé en ce que lesdits moyens de codage sont prévus pour coder ladite information de tarif à l'intérieur dudit message normalisé dans un élément de code du type 〈〈 facility information element 〉〉, décrit dans la recommandation GSM 04.80 au chapitre 3.6 et à l'annexe A.

4. Système de communication comportant des moyens de connexion pour établir une connexion sur requête d' un terminal appelant vers au moins un terminal appelé, lesdits moyens de connexion comprenant des moyens d'émission de messages normalisés à destination du terminal appelant d'une part, et à destination du terminal appelé d'autre part,
caractérisé en ce que le système comprend des moyens de codage pour coder une information de tarif dans un message normalisé spécial du type 〈〈 FACILITY 〉〉 tel que décrit dans la recommandation GSM 04.80 au chapitre 2.3.

5. Terminal de communication comportant des moyens de réception pour recevoir des messages de contrôle d'appel normalisés émis par un système de communication en vue d'établir une connexion vers un terminal distant,
caractérisé en ce que le terminal comporte des moyens de décodage pour décoder une information de tarif contenue dans un message de contrôle d'appel normalisé prédéterminé.

6. Terminal selon la revendication 6, caractérisé en ce que le message de contrôle d'appel normalisé est un message de type 〈〈 ALERTING 〉〉 et message de type 〈〈 SETUP 〉〉 tels que décrits dans la recommandation GSM 04.80.

7. Terminal selon l'une des revendications 5 ou 6, caractérisé en ce que ladite information de tarif est codée à l'intérieur d'un message normalisé dans un élément de code du type 〈〈 facility information element 〉〉, décrit dans la recommandation GSM 04.80 au chapitre 3.6 et à l'annexe A.

8. Terminal de communication comportant des moyens de réception pour recevoir des messages de normalisés émis par un système de communication,
caractérisé en ce que le terminal comprend des moyens de décodage pour décoder une information de tarif contenue dans un message normalisé spécial du type 〈〈 FACILITY 〉〉 tel que décrit dans la recommandation GSM 04.80 au chapitre 2.3.

9. Procédé de communication destiné à établir une connexion sur requête d'un terminal appelant vers un terminal appelé, ledit procédé comprenant une étape d'émission de messages de contrôle d'appel normalisés à destination du terminal appelant d'une part, pour lui confirmer le traitement de sa requête et pour établir une première connexion, et à destination du terminal appelé d'autre part, pour l'avertir d'un appel entrant et pour établir une deuxième connexion,
caractérisé en ce que le procédé comprend une étape de codage pour coder une information de tarif dans l'un desdits messages de contrôle d'appel normalisés à destination d'au moins l'un desdits terminaux.

10. Procédé de communication destiné à établir une connexion entre au moins un terminal appelant et un terminal appelé, ledit procédé comprenant une étape d'émission de messages normalisés à destination des terminaux,
caractérisé en ce que le procédé comprend une étape de codage pour coder une information de tarif dans un message normalisés spécial du type 〈〈 FACILITY 〉〉 tel que décrit dans la recommandation GSM 04.80 au chapitre 2.3, à destination d'au moins l'un desdits terminaux.
